# EUROPÄISCHE PATENTSCHRIFT

(11) **EP 2 221 500 B1**
(45) Veröffentlichungstag und Bekanntmachung des Hinweises auf die Patenterteilung: **07.09.2011**
(21) Anmeldenummer: 10001294.7
(22) Anmeldetag: 09.02.2010
(51) Int. Cl.: F16D 69/04

(54) **Verfahren zur Bearbeitung eines Belagträgers**
Method for processing a lining holder
Procédé destiné au traitement d'un support de garniture

(30) Priorität: 14.02.2009 DE 102009008888
(43) Veröffentlichungstag der Anmeldung: 25.08.2010
(73) Patentinhaber: TMD Friction Services GmbH, 51381 Leverkusen (DE)
(72) Erfinder: Mühl, Armin, 51643 Gummersbach (DE); Wappler, Dieter, 51519 Odenthal (DE)
(74) Vertreter: Müller, Eckhard

(56) Entgegenhaltungen:
- EP-A1- 0 626 228
- EP-A1- 1 106 859
- WO-A1-86/07568
- WO-A1-2008/070329
- DE-B3- 10 345 000
- DE-C1- 19 938 711

## Beschreibung

### Technisches Gebiet

Die Erfindung betrifft ein Verfahren zur Bearbeitung eines Belagträgers, der zur Herstellung einer Bremsbacke mit einem auf dem Belagträger aufzubringenden Reibbelag vorgesehen ist. Die Erfindung betrifft weiterhin ein Verfahren zur Herstellung einer Bremsbacke mit einem entsprechend bearbeiteten Belagträger. Der Belagträger wird bei der Bearbeitung in einem Bearbeitungsbereich mittels energiereicher Strahlung strukturiert.

### Stand der Technik

Im Stand der Technik sind vielfältige Verfahren zur Herstellung von Bremsbacken bekannt. Bremsbacken weisen einen Belagträger auf, auf den ein Reibbelag aufgebracht ist, welcher beim Bremsen mit einem Reibpartner, beispielsweise einer Bremsscheibe, zur Anlage kommt und das Fahrzeug verzögert. Der Belagträger besteht üblicherweise aus Metall und wird meist formgestanzt.

Sehr häufig sind Belagträger nach dem Stanzen und vor der Weiterbearbeitung verunreinigt oder korrodiert. Dies führt bei der Herstellung von Bremsbacken oft zu Schwierigkeiten bei der Aufbringung des Reibbelages, der üblicherweise auf den Belagträger aufgeklebt wird. Auch im Betrieb können die Korrosionen oder Verunreinigungen Probleme verursachen, da sie das Anhaften des Reibbelages auf dem Belagträger verschlechtern, wodurch die maximal übertragbaren Kräfte reduziert werden.

Dabei besteht die Gefahr, dass Ablösungen im Randbereich zu einem Eindringen von Wasser, im Winter versetzt mit Streusalz, und damit zu einem Abrosten des Belages vom Belagträger führen können.

Schlimmstenfalls können Randablösungen bei einer Bremsung zum vollständigen Ablösen des Reibbelages von dem Belagträger führen, was wiederum einen Ausfall der Bremse zur Folge hätte.

Es ist bekannt, die Oberfläche des Belagträgers zur Verbesserung der Aufbringung und des Anhaftens des Reibbelages zu behandeln mit dem Ziel, besagte Verunreinigungen und Oxidationsschichten zu entfernen und darüber hinaus die effektive Oberfläche zwischen Belagträger und Reibbelag zu vergrößern.

Ein bekanntes Verfahren hierzu sieht vor, die Belagträger sandzustrahlen. Es werden auch Verfahren angewandt, die andere Medien als Sand als Strahlgut verwenden. Das Sandstrahlen weist jedoch eine Reihe von Nachteilen auf. Zunächst ist bekannt, dass das Sandstrahlen durch den Energieeintrag des Sandes in das Belagträgermaterial Veränderungen der Geometrie und des Gefüges der Belagträger verursachen kann. Durch die hohe kinetische Energie des Sandes/Strahlgutes, die teilweise an die Belagträger abgegeben wird, wird die Belagträgeroberfläche verdichtet und kann sich undefiniert durchbiegen. Durch das Sandstrahlen und durch die hiermit einhergehenden Änderungen der Belagträgeroberfläche kann der Belagträger darüber hinaus insgesamt wachsen. Dies führt dazu, dass höhere Toleranzen der Belagträger in Kauf genommen werden müssen.

Der Strahlsand hinterlässt auf dem Belagträger auch regelmäßig eine feine Staubschicht, die die Befestigung eines Reibbelages auf dem Belagträger verschlechtert und somit die weiter vorne beschriebenen negativen Auswirkungen haben kann. Dies gilt insbesondere bei der Verwendung lösemittelfreier Klebersysteme und Dünnschicht-Klebern mit Schichtdicken im Bereich <10µm, wie z. B. hoch lösemittelhaltige phenolharzbasierte Kleber. Somit ist es erforderlich, die sandgestrahlten Belagträger zur Verbesserung der Befestigung eines Reibbelages zusätzlich zu reinigen.

Darüber hinaus lässt sich Sandstrahlen nur vergleichsweise großflächig anwenden; sodass eine gezielte Bearbeitung des Belagträgers ausschließlich im Bereich der späteren Fügefläche des Reibbelages nicht oder nur ungenau möglich ist.

Zur Überwindung der voranbeschriebenen Probleme ist in der DE 199 38 711 C1 offenbart, dass vor dem Aufbringen einer Underlayermasse eines Bremsbelages mittels Laserstrahlen eine Mehrzahl von Vertiefungen in eine Trägerplatte eingebracht werden und dass mindestens ein Teil des aus den Vertiefungen austretenden Materials als Ablagerung im Wesentlichen um die Vertiefungen herum aufgeworfen wird.
Trotz Verwendung dieses verbesserten Verfahrens sind jedoch Fälle von sich im Kantenbereich ablösenden Reibbelägen bekannt geworden.

Die Aufwerfungen können darüber hinaus gerade bei Verwendung von Dünnschichtklebem bei der Montage zu Abrissen der Klebeschicht führen und damit das Anhaften der Reibbelagmasse an dem Belagträger verschlechtern.

DE 41 38 933 A1 offenbart ein Verfahren zur Herstellung von Trägerplatten für Bremsbeläge für Schienen- und schienenungebundene Fahrzeuge sowie einen Bremsbelag mit einer nach dem Verfahren hergestellten Trägerplatte. Weiterhin ist offenbart, dass die Trägerplatte einer Raugrundbehandlung unterzogen wird, wodurch sich die Festigkeitseigenschaften nach der Raugrundbehandlung ändern. Da Trägerplatten in ihren Endbereichen besonders hoch beansprucht werden würden, ist vorgesehen, die Festigkeitseigenschaften der Trägerplatten zu verbessern oder zumindest zu erhalten, indem die Trägerplatte im Bereich ihrer hoch belasteten Zonen durch induktive Wärmezufuhr oder durch Widerstandserwärmung, Flammenerwärmung oder Lasererwärmung bei einer Behandlungszeit von 3 bis 15 Sekunden bei Temperaturen zwischen 800° C und 900° C, auch über 900° C, behandelt werden und anschließend auf Raumtemperatur abgekühlt werden. Dies bewirke eine partielle Härtung an den betreffenden Stellen.

US 2006/0180414 A1 offenbart einen Belagträger mit Haltestrukturen für den Reibbelag, welcher in Reihen angeordnet ist, wobei jede Haltestruktur einen Vorsprung und einen Rücksprung aufweist, wobei der Vorsprung beim Erzeugen des Rücksprungs durch Materialverschiebung erzeugt wird. In einer Ausführungsform kann vorgesehen sein, dass die Reihen der Haltestrukturen im Wesentlichen entlang der longitudinalen Achse der Belagträgerplatte verlaufen und damit in Richtung der Scherkräfte. Damit könne sichergestellt werden, dass in den hoch belasteten Randbereichen des Reibbelages immer ein Vorsprung vorgesehen ist.

EP 0 626 228 A1 offenbart ein Verfahren zur Modifizierung der Oberfläche eines Werkstücks, wobei eine wichtige Anwendung des Verfahrens das Befestigen von Bremsbelägen auf metallene Bremsbelagrückseiten ist. Wesentlicher Erfindungsgedanke hierbei ist, die zu modifizierende Oberfläche homogen mit einer Vielzahl von aneinandergrenzenden Kavitäten und Wulsten zu überziehen, wobei die Wulste eine Hinterschneidung aufweisen. Die einzelnen Wulste und Kavitäten sind kleiner als 1 mm.

WO 86/07568 offenbart ein Verfahren zur Herstellung eines Produktes, das eine Klebung zwischen zwei Oberflächen aufweist. Hierzu wird wenigstens eine der Oberflächen des Produktes in den Strahlverlauf eines Energiestrahles einer bestimmten Energiedichte für eine bestimmte Dauer eingebracht, um diese Oberfläche zu modifizieren. Anschließend wird die modifizierte Oberfläche mit einem Kleber in Kontakt gebracht. Insbesondere ist vorgesehen, dass der Energiestrahl von einem Laser oder einem gepulsten Laser erzeugt wird.

### Aufgabe

Aufgabe der Erfindung ist es daher, ein Verfahren zur Bearbeitung eines Belagträgers sowie ein Verfahren zur Herstellung einer Bremsbacke anzugeben, welche die Nachteile des Standes der Technik überwinden und es möglich machen, einen Belagträger gezielt so zu behandeln, dass ein optimaler Haftgrund zur Befestigung des Reibbelages vorliegt.

Zur Vermeidung von Kantenablösungen des Reibbelages im Betrieb ist es insbesondere erwünscht, dass der Reibbelag insbesondere im Randbereich besonders gut anhaftet.

### Darstellung der Erfindung

Die Aufgabe wird gelöst durch ein Verfahren zur Bearbeitung eines Belagträgers gemäß Anspruch 1 sowie ein Verfahren zur Herstellung einer Bremsbacke gemäß dem nebengeordneten Anspruch 12. Vorteilhafte Ausgestaltungen der Erfindung sind Gegenstand der Unteransprüche.

Ein erfindungsgemäßes Verfahren zur Bearbeitung eines Belagträgers sieht vor, dass wenigstens ein Bereich der Belagträger mit energiereicher Strahlung durch Einbringen einer Struktur oberflächenbehandelt wird.

Energiereiche Strahlung ist elektromagnetische Strahlung, die in der Lage ist, die Oberfläche der Belagträger zu verändern, beispielsweise durch Sublimation von Belagträgermaterial abzutragen oder durch Aufschmelzen und Verdrängen umzuformen.

Energiereiche Strahlung hat den Vorteil, dass sie sehr viel gezielter eingesetzt werden kann, als die aus dem Stand der Technik überwiegend bekannten, nur großflächig und unspezifisch anzuwendenden und unstrukturierten Verfahren. Mit Hilfe der Erfindung lässt sich ein Belagträger sehr viel genauer bearbeiten und dadurch definiertere Bedingungen schaffen, so dass eine bessere Verbindung eines Reibbelages mit dem Belagträger möglich ist.

Die Bearbeitung hat zur Folge, dass Verschmutzungen und Korrosion von der Belagträgeroberfläche entfernt werden, was ein besseres Anhaften des Klebers, sofern verwendet, bzw. des Reibbelages zur Folge hat.

Mit Hilfe einer erfindungsgemäßen Struktur lässt sich eine weitere Verbesserung der Verbindung des Reibbelages mit dem Belagträger erreichen, da hierdurch die effektiv wirkende Oberfläche zwischen Belagträger und Reibbelag signifikant erhöht wird und dadurch die adhäsiven Kräfte zwischen diesen Bauteilen.

Erfindungsgemäß ist weiterhin vorgesehen, dass in einen Rand des Bearbeitungsbereichs, der mit energiereicher Strahlung bearbeitet wird, eine von dem übrigen Bearbeitungsbereich abweichende Struktur eingebracht wird. Dies ermöglicht, gezielt die Adhäsion im Randbereich des Reibbelages weiter zu steigern und die zur Ablösung der Reibmasse von dem Reibbelag notwendigen Scherkräfte signifikant zu erhöhen.

Die gezielte andersartige Bearbeitung des Randbereichs hat darüber hinaus zur Folge, dass die Bearbeitungszeit zur Durchführung des Verfahrens minimiert werden kann. Insbesondere bei stärkerer Bearbeitung eines der Bereiche, des Randbereichs oder des übrigen Bearbeitungsbereichs, kann die Fläche stärkerer Bearbeitung auf ein notwendiges Minimum beschränkt bleiben, was die Effizienz und Wirtschaftlichkeit des Verfahrens erhöht.

Als weiterer Vorteil ergibt sich durch die gezielte Positionierbarkeit der energiereichen Strahlung, dass die von dem strukturierten, z.B. aufgerauten, Randbereich eingeschlossene Fläche auch nur partiell, z.B. nur im Randbereich bearbeitet werden kann.

Gemäß einer ersten vorteilhaften Weiterbildung wird der Belagträger auf wenigstens einer Seite, der späteren Reibmassenseite, durch energiereiche Strahlung oberflächenbehandelt.

Weiterhin kann gemäß einer Weiterbildung beispielsweise eine Oberflächen- und Randbearbeitung des Belagträgers vorgesehen sein, sodass der Randbereich des Belagträgers zusätzlich mit einer gewünschten Oberflächenbeschaffenheit versehen werden kann.

Gemäß einer vorteilhaften Weiterbildung des Verfahrens ist vorgesehen, dass der Belagträger in einem Befestigungsbereich zu dem aus Reibmasse bestehenden Reibbelag bearbeitet wird. Auf diese Weise lässt sich im Befestigungsbereich zum Reibbelag eine definierte Oberflächeneigenschaft einstellen.

Bevorzugt wird dabei die Oberfläche im Bearbeitungsbereich oder zumindest im Befestigungsbereich aufgeraut. Ein Aufrauen der Belagträgeroberfläche in einem Befestigungsbereich zu dem Reibbelag bewirkt eine Vergrößerung der effektiven Oberfläche zwischen Belagträger und Reibbelag und führt damit zu einer besseren Verbindung der beiden Bauteile miteinander.

Da beim Aufrauen Material entfernt wird, wird zusätzlich störender Schmutz, beispielsweise Staub oder Fett, mit entfernt, sodass die bearbeitete Belagträger in dem Befestigungsbereich besonders sauber ist und gute Bedingungen zur Befestigung der Bauteile aneinander bietet.

Bevorzugt wird der Randbereich stärker aufgeraut als der übrige Bearbeitungsbereich. Dies erhöht im Randbereich die effektive Oberfläche besonders und führt zu stärkerer Adhäsion der Reibmasse am Belagträger.

Ein weiterer Vorteil ergibt sich, wenn die Strukturen ohne Aufwerfungen erzeugt werden, also eine im Wesentlichen ebene Oberfläche mit darin vertieften Strukturen erzeugt wird. Hierdurch kann insbesondere die Eignung des Belagträgers für Dünnschichtklebetechnik verbessert werden, da bei Oberflächen ohne Aufwerfungen die Gefahr von möglichen Klebefilmabrissen vermindert ist. "Ohne Aufwerfungen" ist dabei nicht zwangsläufig im Sinne von absolut eben zu verstehen, sondern derart, dass möglicherweise beim Bearbeiten der Oberfläche entstehende erhöhende Unebenheiten wesentlich flacher sind als die eingebrachten Vertiefungen, insbesondere flacher als 1/3, besonders bevorzugt flacher als 1/10, der Tiefe der jeweiligen benachbarten strukturellen Vertiefung.

Als besonders geeignet haben sich im Wesentlichen Strukturen mit annähernd oder exakt parallelen Spuren erwiesen, die eine große Kontaktoberfläche zwischen Belagträger und Reibbelag erzeugen und die darüber hinaus mit energiereicher Strahlung schnell herstellbar sind, da annähernd oder vollständig parallele Spuren in alternierenden Richtungen schnell durch mäanderartiges Fortschreiten der energiereichen Strahlung in die Oberfläche einbringbar sind. Diese Spuren weisen punktuelle Vertiefungen auf, die in ihrem Abstand zueinander definiert werden können, sodass die punktuellen Vertiefungen ineinander übergehen können oder als einzelne nebeneinander angeordnete Struktur ausgebildet sind.

Eine andersartige Bearbeitung des Randbereiches kann durch andere, bevorzugt geringere, Spurabstände und/oder durch andere, bevorzugt größere, Spurtiefen erreicht werden.

Auch lassen sich andere Strukturmuster als annähernd/oder parallele Spuren erzeugen. Ein mögliches Beispiel hierfür sind kreisartige Strukturen.

Besonders bevorzugt wird als energiereiche Strahlung Laserstrahlung verwendet. Hierzu bieten sich insbesondere Diodenlaser an, die eine sehr kompakte Bauweise mit hocheffizientem Betrieb und langer Lebensdauer verbinden. Die Strahlqualität von Diodenlasern ist zur Oberflächenbehandlung von Belagträgern ausreichend.

Bevorzugt liegt die Wellenlänge des Lasers zwischen 805nm und 950nm, da der Wirkungsquerschnitt mit üblichen Materialien der Belagträger in diesem Bereich besonders hoch ist.

Ein weiterer Vorteil ergibt sich, wenn die energiereiche Strahlung gepulst ist. Dadurch lassen sich eine signifikante Erwärmungen des Belagträgers und die damit verbundenen Folgen, beispielsweise eine Verformung der Belagträger oder eine Änderung des Belagträgergefüges, vermeiden. Als besonders geeignet hat sich eine Pulsfrequenz zwischen 10 kHz und 30 kHz, insbesondere um 20 kHz, herausgestellt, welche eine hohe Bearbeitungsgeschwindigkeit erlaubt.

Zur Bearbeitung der Belagträger werden bevorzugt Umlenkmittel verwendet, die die energiereiche Strahlung auf die zu bearbeitenden Bereiche lenken. Auf diese Weise kann die Anzahl notwendiger Positionierungen von Strahlungsquelle zum Belagträger reduziert werden. Zur Oberflächenbehandlung der Belagträger auf wenigstens einer Seite ist mit Hilfe von Umlenkmitteln meist keine Umpositionierung von Belagträger und Strahlenquelle zueinander erforderlich.

Bevorzugt werden durch die Oberflächenbehandlung Rautiefen von Ra 1 bis Ra 10, besonders bevorzugt von Ra 6 bis Ra 7, erzeugt. Bei derartigen Rautiefen lassen sich optimale effektive Oberflächen schaffen.

Ein erster unabhängiger Gegenstand der Erfindung betrifft ein Verfahren zur Herstellung einer Bremsbacke, bei dem ein Reibbelag bzw. eine Reibmasse auf einem Belagträger befestigt wird, bei dem der Belagträger gemäß der voran beschriebenen Erfindung vorbehandelt wird.

Mit Hilfe eines derartigen Verfahrens lässt sich der Belagträger optimal zur Verbindung mit dem Reibbelag vorbehandeln, sodass die Belagträger in dem Verbindungsbereich angeraut und zudem optimal gereinigt sind. Durch den Verzicht auf mechanische Abtragungen, kann darüber hinaus eine Verschmutzung der Belagträger durch das Abtragungsmittel, beispielsweise Sand, vermieden werden.

Bevorzugt ist vorgesehen, dass der Reibbelag auf dem bearbeiteten Bereich des Belagträgers mittels eines Klebers angebracht wird. Besonders geeignet ist dieses Verfahren für die Verarbeitung lösemittelfreier und/oder dünnschichtig aufzubringender Kleber, da lösemittelfreie Kleber umweltschonender als lösemittelhaltige Kleber sind und beim erfindungsgemäßen Herstellungsverfahren zu genauso guten Klebeeigenschaften wie beim Verwenden von lösemittelhaltigen Klebern führen, da die bearbeiteten Bereiche der Belagträger frei von Verunreinigungen, zum Beispiel Staub und/oder Fett, sind.

Gemäß einer Weiterbildung der Erfindung wird der Kleber nur sektoriell auf den Befestigungsbereich und/oder auf den Reibbelag aufgetragen. Es hat sich gezeigt, dass das erfindungsgemäße Verfahren derart saubere Oberflächen schafft, dass auch ohne Kleber eine hohe Adhäsion zwischen Reibbelag und Belagträger vorhanden ist. Je nach Materialpaarung kann aber eine zusätzliche Sicherung durch Kleber in höherbelasteten Bereichen sinnvoll sein, wohingegen dies in weniger belasteten Bereichen nicht erforderlich ist. Damit lässt sich eine Reduzierung der erforderlichen Klebermenge erreichen.

Alternativ kann der Reibbelag auf den bearbeiteten Bereich der Belagträger ohne Verwendung eines Klebers angebracht werden. Das erfindungsgemäße Verfahren schafft derart saubere Oberflächen, dass ein Kleber je nach Materialpaarung teilweise gar nicht nötig ist.

Weitere Ziele, Merkmale sowie vorteilhafte Anwendungsmöglichkeiten der Erfindung ergeben sich aus der nachfolgenden Beschreibung eines Ausführungsbeispiels anhand der Zeichnungen. Dabei bilden sämtliche beschriebenen und/oder bildlich dargestellten Merkmale in ihrer sinnvollen Kombination den Gegenstand der vorliegenden Erfindung, auch unabhängig von den Patentansprüchen und deren Rückbezügen.

### Kurzbeschreibung der Figuren

Die Erfindung wird anhand eines Ausführungsbeispiels beschrieben. Dabei zeigen schematisch:
- Fig. 1: eine Belagträger während der Bearbeitung in perspektivischer Darstellung;
- Fig. 2: eine fertige Bremsbacke mit einer nach dem erfindungsgemäßen Verfahren behandelten Belagträger in perspektivischer Ansicht sowie
- Fig. 3: eine Schnittdarstellung gemäß der Schnittlinie A-A durch die Bremsbacke nach Fig. 2.

### Ausführungsbeispiel

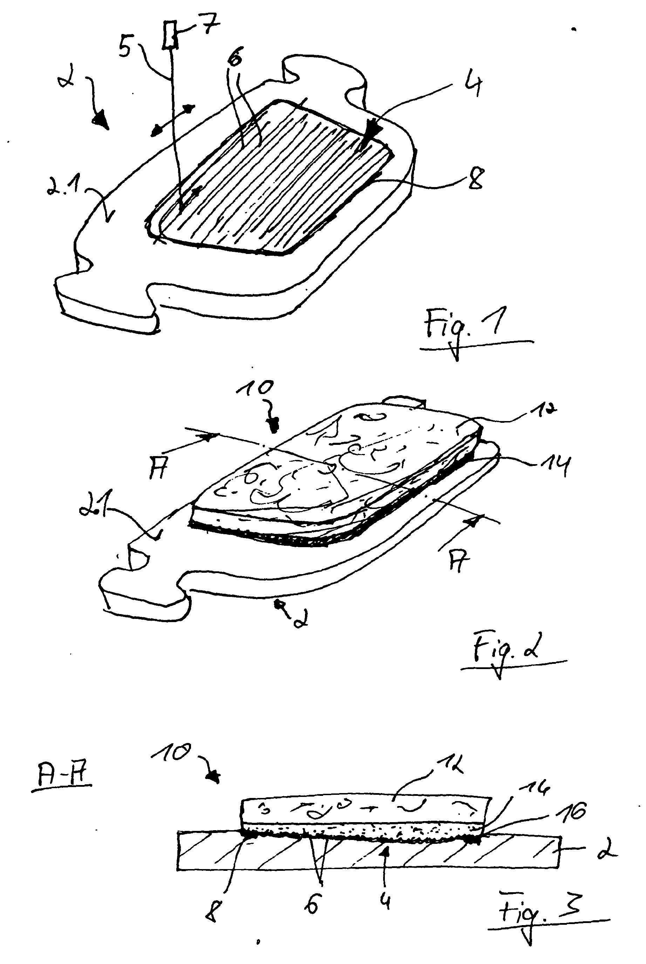

Fig. 1 zeigt einen Belagträger 2 während der Durchführung des erfindungsgemäßen Verfahrens zur Behandlung einer Oberseite 2.1 des Belagträgers 2 in einem Bearbeitungsbereich 4.

Auf dem Bearbeitungsbereich 4 wird bei einer nach der Oberflächenbehandlung folgende Herstellung einer Bremsbacke ein Reibbelag aufgeklebt. Zur Aufrauung des Bearbeitungsbereichs 4 werden mittels eines Laserstrahls 5 eine Vielzahl von parallelen Spuren 6 durch eine atternierende bzw. mäandrierende Bewegung des Laserstrahls 5 relativ zu dem Belagträger 2 erzeugt.

Durch die Spuren 6 in dem Belagträger 2 ist die effektive Oberfläche zur Verbindung zwischen Belagträger 2 und Reibbelag 12 vergrößert, wodurch sich eine stärkere Verbindung der Bauteile miteinander ergibt.

Zur Bereitstellung des Laserstrahls 5 wird ein Diodenlaser 7 verwendet, der eine gepulste Laserstrahlung mit einer Pulsfrequenz von bis zu 30 kHz erzeugt.

Ein Randbereich 8 des Bearbeitungsbereichs 4 ist abweichend zum Inneren des Bearbeitungsbereichs 4 stärker strukturiert ausgebildet, um die Verbindung zwischen Reibbelag und Belagträger 2 am Rand zu verbessern. Hierbei wird im Randbereich 8 eine höhere Rautiefe Rz als im übrigen Bearbeitungsbereich erzeugt, zum Beispiel Rz 50-60 µm im Randbereich 8 gegenüber 30-40 µm in der vom Randbereich 8 eingeschlossenen Fläche.

Fig. 2 zeigt in perspektivischer Darstellung eine Bremsbacke 10, die auf der Basis der Belagträger 2 durch einen hierauf aufgebrachten Reibbelag 12 hergestellt ist.

Der Reibbelag 12 ist vermittels einer Zwischenschicht auf der Oberseite 2.1 des Belagträgers 2 befestigt. Zur Verbindung ist ein in Fig. 2 nicht dargestellter Kleber zwischen Belagträger 2 und Reibbelag 12 eingebracht.

Fig. 3 zeigt einen Schnitt entlang der Schnittlinie A-A aus Fig. 2 durch die erfindungsgemäße Bremsbacke 10.

Ein lösemittelfreier oder lösemittelhaltiger Kleber 16 ist auf den Bearbeitungsbereich 4 der Oberseite 2.1 des Belagträgers 2 aufgebracht und der Reibbelag 12 mit der Zwischenschicht 14 auf den Belagträger 2 aufgeklebt. Der Rand des Bearbeitungsbereichs 8 fällt mit dem Rand der Zwischenschicht 14 zusammen, wodurch sich in diesem Randbereich eine besonders belastbare und haltbare Verbindung ergibt.

### Bezugszeichenliste

- 2: Belagträger
- 2.1: Oberseite der Belagträger
- 4: Bearbeitungsbereich
- 5: Laserstrahl
- 6: Spuren
- 7: Diodenlaser
- 8: Rand des Bearbeitungsbereichs
- 10: Bremsbacke
- 12: Reibbelag
- 14: Zwischenschicht
- 16: Kleber

## Patentansprüche

1. Verfahren zur Bearbeitung eines Belagträgers (2), der zur Herstellung einer Bremsbacke (10) mit einem auf dem Belagträger (2) aufzubringenden Reibbelag (12) vorgesehen ist, durch Oberflächenbehandlung wenigstens eines Bearbeitungsbereichs (4) einer Belagträgeroberfläche (2.1) durch Einbringen einer Struktur in dem Bearbeitungsbereich (4) mittels energiereicher Strahlung (5), **dadurch gekennzeichnet, dass** in einen Rand (8) des Bearbeitungsbereiches (4) eine vom übrigen Bearbeitungsbereich abweichenden Struktur eingebracht wird.

2. Verfahren nach Anspruch 1, **dadurch gekennzeichnet, dass** der Belagträger (2) auf wenigstens einer Seite (2.1) in dem Bearbeitungsbereich (4) strukturiert wird, welche in einer fertig gestellten Bremsbacke (10) dem Reibbelag (12) zugewandt sein wird.

3. Verfahren nach Anspruch 1 oder 2, **dadurch gekennzeichnet, dass** der Bearbeitungsbereich ein Befestigungsbereich (4) zu einem Reibbelag (12) ist.

4. Verfahren nach einem der vorangegangenen Ansprüche, **dadurch gekennzeichnet, dass** der Bearbeitungsbereich (4) aufgeraut wird

5. Verfahren nach Anspruch 4, **dadurch gekennzeichnet, dass** der Rand (8) stärker aufgeraut wird als der übrige Bearbeitungsbereich.

6. Verfahren nach einem der vorangegangenen Ansprüche, **dadurch gekennzeichnet, dass** die Strukturen im Wesentlichen, insbesondere vollständig, ohne Aufwerfungen erzeugt werden.

7. Verfahren nach einem der vorangegangenen Ansprüche, **dadurch gekennzeichnet, dass** die Strukturen im Wesentlichen parallele Spuren (6) sind.

8. Verfahren nach einem der vorangegangenen Ansprüche, **dadurch gekennzeichnet, dass** als energiereiche Strahlung Laserstrahlung (5), bevorzugt Laserstrahlung eines Diodenlasers (7), verwendet wird.

9. Verfahren nach Anspruch 8, **dadurch gekennzeichnet, dass** die Wellenlänge des Lasers (7) zwischen 805 nm und 950 nm beträgt.

10. Verfahren nach einem der vorangegangenen Ansprüche, **dadurch gekennzeichnet, dass** die energiereiche Strahlung (5) gepulst ist, bevorzugt mit Pulsfrequenzen von ca. 10 kHz bis ca. 30 kHz, bevorzugt 20 kHz.

11. Verfahren nach einem der vorangegangenen Ansprüche, **dadurch gekennzeichnet, dass** durch die Oberflächenbehandlung Mittenrauwerte von Ra 1 bis 10, bevorzugt 6 bis 7, erzeugt werden.

12. Verfahren zur Herstellung einer Bremsbacke, bei dem ein Reibbelag (12) auf einem Belagträger (2) befestigt wird, bei dem der Belagträger (2) nach einem der Ansprüche 1 bis 10 im Befestigungsbereich (4) vorbehandelt wird.

13. Verfahren nach Anspruch 12, **dadurch gekennzeichnet, dass** ein Reibbelag (12) auf den bearbeiteten Bereich (4) mittels eines Klebers (16) angebracht wird.

14. Verfahren nach Anspruch 13, **dadurch gekennzeichnet, dass** der Kleber (16) nur sektoriell auf den Befestigungsbereich (4) und/oder auf den Reibbelag (12) aufgetragen wird.

15. Verfahren nach Anspruch 12, **dadurch gekennzeichnet, dass** ein Reibbelag (12) auf den bearbeiteten Bereich (4) ohne Verwendung eines Klebers angebracht wird.

## Claims

1. Method of processing a lining carrier (2), which for producing a brake pad (10) is provided with a friction lining (12) to be mounted on the lining carrier (2), by surface treatment of at least one processing region (4) of a lining carrier surface (2.1) by introduction of a structure into the processing region (4) by means of high-energy radiation (5), **characterised in that** a structure differing from the rest of the processing region is formed in an edge (8) of the processing region (4).

2. Method according to claim 1, **characterised in that** the lining carrier (2) is structured on at least one side (2.1) in the processing region (4) which in a finished brake pad (10) will face the friction lining (12).

3. Method according to claim 1 or 2, **characterised in that** the processing region is a fastening region (4) with respect to a friction lining (12).

4. Method according to any one of the preceding claims, **characterised in that** the processing region (4) is roughened.

5. Method according to claim 4, **characterised in that** the edge (8) is more strongly roughened than the rest of the processing region.

6. Method according to any one of the preceding claims, **characterised in that** the structures are produced substantially, particularly completely, without build-ups.

7. Method according to any one of the preceding claims, **characterised in that** the structures are substantially parallel tracks (6).

8. Method according to any one of the preceding claims, **characterised in that** laser radiation (5), preferably laser radiation of a diode laser (7), is used as high-energy radiation.

9. Method according to claim 8, **characterised in that** the wavelength of the laser (7) is between 805 nm and 950 nm.

10. Method according to any one of the preceding claims, **characterised in that** the high-energy radiation (5) is pulsed, preferably at pulse frequencies of approximately 10 kHz up to approximately 30 kHz, preferably 20 kHz.

11. Method according to any one of the preceding claims, **characterised in that** mean roughness values of Ra 1 to 10, preferably 6 to 7, are produced by the surface treatment.

12. Method of producing a brake pad, in which a friction lining (12) is fastened to a lining carrier (2), wherein the lining carrier (2) is pretreated in the fastening region (4) in accordance with any one of claims 1 to 10.

13. Method according to claim 12, **characterised in that** a friction lining (12) is mounted on the processed region (4) by means of an adhesive (16).

14. Method according to claim 13, **characterised in that** the adhesive (16) is applied only in sectors to the fastening region (4) and/or to the friction lining (12).

15. Method according to claim 12, **characterised in that** a friction lining (12) is mounted on the processed region (4) without use of an adhesive.

## Revendications

1. Procédé d'usinage d'un porte-garniture (2), lequel est prévu pour fabriquer une plaquette de frein (10) munie d'une garniture de friction (12) à appliquer sur le porte-garniture (2), en effectuant un traitement de surface d'au moins une zone d'usinage (4) d'une surface de porte-garniture (2.1) par façonnage d'une structure dans la zone d'usinage (4) au moyen d'un rayonnement (5) de haute énergie, **caractérisé en ce qu'**une structure différente du reste de la zone d'usinage est façonnée dans un bord (8) de la zone d'usinage (4).

2. Procédé selon la revendication 1, **caractérisé en ce que** le porte-garniture (2) est structuré sur au moins un côté (2.1) dans la zone d'usinage (4), lequel fera face à la garniture de friction (12) dans une plaquette de frein (10) terminée.

3. Procédé selon la revendication 1 ou 2, **caractérisé en ce que** la zone d'usinage est une zone de fixation (4) pour une garniture de friction (12).

4. Procédé selon l'une des revendications précédentes, **caractérisé en ce que** la zone d'usinage (4) est rendue rugueuse.

5. Procédé selon la revendication 4, **caractérisé en ce que** le bord (8) est rendu plus rugueux que le reste de la zone d'usinage.

6. Procédé selon l'une des revendications précédentes, **caractérisé en ce que** les structures sont pour l'essentiel, notamment entièrement, générées sans évasement.

7. Procédé selon l'une des revendications précédentes, **caractérisé en ce que** les structures sont pour l'essentiel des traces parallèles (6).

8. Procédé selon l'une des revendications précédentes, **caractérisé en ce que** le rayonnement de haute énergie utilisé est un rayonnement laser (5), de préférence le rayonnement laser d'une diode laser (7).

9. Procédé selon la revendication 8, **caractérisé en ce que** la longueur d'onde du laser (7) est comprise entre 805 nm et 950 nm.

10. Procédé selon l'une des revendications précédentes, **caractérisé en ce que** le rayonnement de haute énergie (5) est pulsé, de préférence avec des fréquences d'impulsions entre environ 10 kHz et environ 30 kHz, de préférence de 20 kHz.

11. Procédé selon l'une des revendications précédentes, **caractérisé en ce que** les indices de rugosité moyens produits par le traitement de surface sont compris entre Ra 1 et 10, de préférence de 6 à 7.

12. Procédé de fabrication d'une plaquette de frein, selon lequel une garniture de friction (12) est fixée sur un porte-garniture (2), selon lequel le porte-garniture (2) est soumis à un traitement préalable dans la zone de fixation (4) selon l'une des revendications 1 à 10.

13. Procédé selon la revendication 12, **caractérisé en ce qu'**une garniture de friction (12) est appliquée sur la zone usinée (4) au moyen d'un adhésif (16).

14. Procédé selon la revendication 13, **caractérisé en ce que** l'adhésif (16) n'est appliqué que par secteurs sur la zone de fixation (4) et/ou sur la garniture de friction (12).

15. Procédé selon la revendication 12, **caractérisé en ce que** la garniture de friction (12) est appliquée sur la zone usinée (4) sans utiliser d'adhésif.
